# FASCICULE DE BREVET EUROPEEN

(11) **EP 0 547 976 B1**
(45) Date de publication et mention de la délivrance du brevet: **17.03.1999**
(21) Numéro de dépôt: 92403458.0
(22) Date de dépôt: 17.12.1992
(51) Int. Cl.: G06F 13/28, G06F 13/12

(54) **Dispositif universel de couplage comprenant un contrôleur de transfert multiple de données entre une pluralité de mémoires et un bus d'ordinateur**
Universelles Ankopplungsgerät mit Steuerung für mehrfache Datenübertragungen zwischen einer Mehrzahl von Speichern und einem Rechnerbus
Universal coupling apparatus comprising a controller for multiple data transfers between a plurality of memories and a computer bus

(30) Priorité: 19.12.1991 FR 9115814
(43) Date de publication de la demande: 23.06.1993
(73) Titulaire: BULL S.A., 92800 Puteaux (FR)
(72) Inventeur: Le Quere, Patrick, F-91140 Villebon Sur Yvette (FR)
(74) Mandataire: Colombe, Michel

(56) Documents cités:
- EP-A- 0 398 178
- EP-A- 0 410 860
- IBM TECHNICAL DISCLOSURE BULLETIN vol. 32, no. 1, Juin 1989, ARMONK, NY, US pages 396 - 404 'Simultaneous Dual-Port Direct Memory Access Transfers'

## Description

La présente invention concerne un dispositif universel de couplage d'un bus d'ordinateur à un contrôleur d'un groupe de périphériques ou terminaux qui sont reliés entre eux par une liaison spécifique à laquelle le contrôleur est relié physiquement, comprenant un contrôleur de transfert multiple de données organisé par un microprocesseur entre une pluralité de mémoires dont une au moins est associée à ce dernier, et le bus d'ordinateur auquel le contrôleur est relié. Cette liaison peut être celle d'un réseau de transmission de données en forme d'anneau de type FDDI, dont le support de transmission est constitué par des fibres optiques, ou encore une liaison de type SCSI reliant entre elles des mémoires à disques magnétiques. Aussi bien, les liaisons de type FDDI que SCSI sont normalisées par l'ANSI (American National Standard Institute) et par l'ISO Organisation internationale de normalisation (International Standard organization).

Un dispositif universel de couplage est décrit dans la demande de brevet français 91.08908 déposée le 15.07.91 par la compagnie demanderesse sous le titre "Dispositif universel de couplage d'un bus d'ordinateur à un contrôleur d'un groupe de périphériques" (FR-A-2 679 352 publiée le 22.01.93).

Afin de mieux comprendre comment est constitué le contrôleur de transfert multiple de données et comment il fonctionne, il est utile de rappeler quels sont les éléments constitutifs essentiels du dispositif universel de couplage décrit dans la demande précitée, étant entendu que la description de cette demande est considérée comme partie intégrante de la présente description.

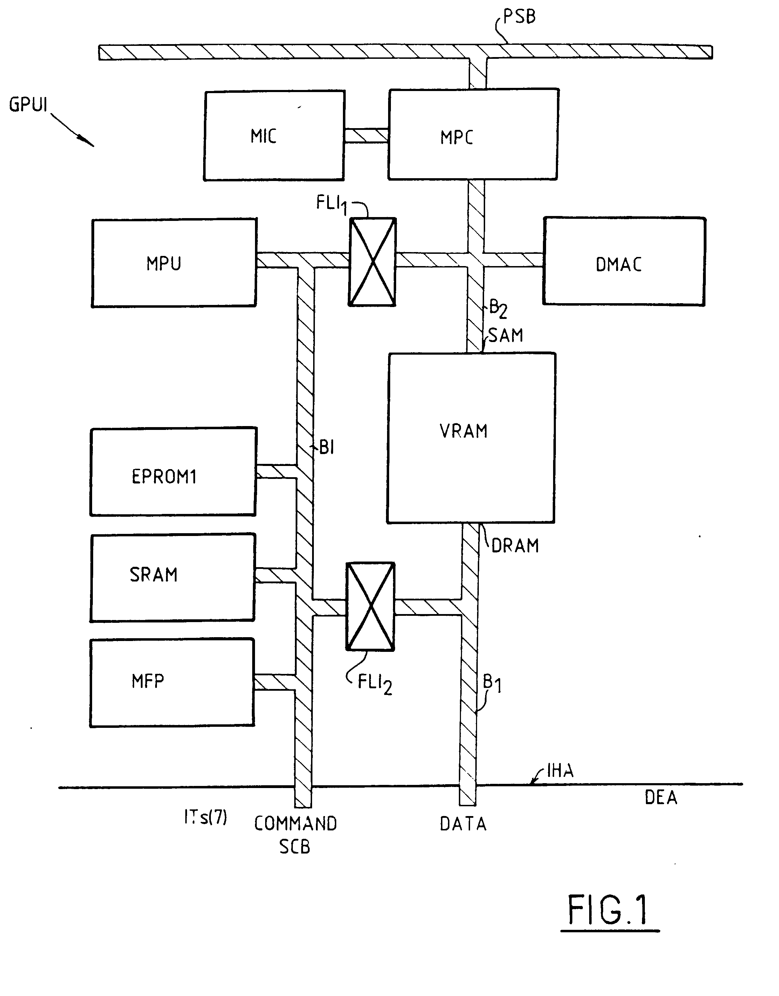

On se réfère à la figure 1 qui montre quels sont les éléments constitutifs essentiels du dispositif universel de couplage en question.

Le bus d'ordinateur est le bus PSB de type parallèle, par exemple constitué par un MULTIBUS II (Marque déposée par la Société INTEL), normalisé suivant la norme IEEE 1296 ( Institute of Electrical and Electronic Engineers). Ce bus relie entre eux les différents éléments constitutifs de l'ordinateur (Processeur central ou processeurs d'entrée/sortie, mémoires etc...).

Les éléments constitutifs essentiels du dispositif universel de couplage GPUI sont les suivants :
- le coprocesseur MPC (par exemple de type VL82c389 de la Société INTEL), qui sert d'interface avec PSB,
- le microcontrôleur MIC qui supporte la fonction d'interconnexion dite "interconnect", du MULTIBUS II (défini également par la norme IEEE1296),
- le microprocesseur MPU, qui est en fait l'unité centrale de GPUI, muni de son bus interne BI et associé respectivement à une mémoire programmable effaçable EPROM₁, une mémoire vive SRAM, et un gestionnaire d'interruption, à savoir MFP. Les éléments EPROM₁, SRAM, MFP sont tous connectés au bus interne BI du microprocesseur MPU,
- la mémoire de type vidéo-RAM, à double port, désignée par VRAM,
- Les éléments d'isolation logique FLI₁ et FLI₂
- le contrôleur d'accès direct mémoire DMAC, connecté au bus B₂ reliant VRAM au coprocesseur MPC,

La mémoire double port (VRAM) est reliée par l'intermédiaire d'un bus (B₁) à une interface (IHA) reliant entre eux le dispositif universel de couplage GPUI à un contrôleur DEA d'un groupe de périphériques ou terminaux, lequel est relié lui-même à la dite liaison spécifique.

On trouvera une description de ce contrôleur DEA, ainsi que de l'interface IHA dans le brevet français N° 2650412 déposé le 27.07.89 par la Compagnie demanderesse et publié le 01.02.91.

De même, le bus BI de l'ordinateur est relié à l'interface IHA.

Le but du dispositif universel de couplage est le transfert des données des trames envoyées par l'ordinateur ORD qui contient le bus PSB vers la liaison spécifique à travers le contrôleur DEA et réciproquement en réalisant l'adaptation et la gestion des différents protocoles de transmission utilisés aussi bien sur le bus PSB, et par l'ordinateur ORD, que sur la dite liaison. Le dispositif universel de couplage GPUI transfère donc les données depuis PSB jusqu'à l'interface IHA et réciproquement tout en travaillant en même temps sur l'adaptation des protocoles et des débits entre le bus PSB et la liaison spécifiques (FDDI, SCSI,...).

Le microprocesseur MPU est un microprocesseur 32 bits de fréquence d'horloge 25 Mhz. Il gère le bus interne BI qui est un bus non-multiplexé de 32 bits de données et de 32 bits d'adresse.

La mémoire morte EPROM₁ d'une capacité de 128 ou 256 Kilo-octets contient les programmes d'auto-tests et d'initialisation du dispositif de couplage GPUI, le système d'exploitation GPOS du microprocesseur CPU étant contenu dans la mémoire statique SRAM . Celle-ci a une capacité de 512 Kilo-octets ou 1 Méga-octet.

Le système d'exploitation GPOS organise le fonctionnement d'ensemble du microprocesseur et par conséquent supervise le transfert des trames depuis PSB jusqu'à l'interface IHA et réciproquement. Un exemple de système d'exploitation GPOS est décrit dans la demande de brevet français N° 9108907 déposée le 15.07.91 par la Société demanderesse, sous le titre "Système d'exploitation pour dispositif universel de couplage d'un bus d'ordinateur à une liaison spécifique d'un réseau" (FR-A-2 679 351, publiée le 22.01.93).

Le programme d'adaptation des protocoles utilisés d'une part entre l'ordinateur ORD et le dispositif de couplage via le bus PSB, et d'autre part, sur le réseau utilisant la liaison spécifique (FDDI, SCSI, etc..), est contenu dans la mémoire SRAM.

Le microprocesseur MPU est le cerveau du dispositif de couplage, car il initialise le transfert des données, réalise l'adaptation des protocoles, exécute son code, et transfère les données utiles entre DEA et l'ordinateur ORD et réciproquement tout en dialoguant avec DEA avec lequel il échange des commandes et des status par exemple de la manière indiquée dans le brevet français 2 650 412 précité.

Ainsi donc, le transfert de données entre l'interface IHA et la mémoire VRAM d'une part, entre cette dernière et le bus PSB via MPC d'autre part, est organisé par le microprocesseur MPU, ce dernier transfert étant effectué sous le contrôle du circuit accès direct mémoire DMAC. La transformation des blocs de contrôle spécifiques des protocoles utilisés sur le bus d'ordinateur, en ceux utilisés sur la liaison et réciproquement est effectuée par le microprocesseur qui assure leur transfert sur son bus interne BI vers ou depuis l'interface de liaison IHA.

Les éléments FLI₁ et FLI₂ empêchent le transfert de données utiles entre le bus B₂ et le bus BI, et entre le bus B₁ et le bus BI.

Le contrôleur d'accès direct mémoire DMAC assure le transfert de données utiles entre le coprocesseur MPC et l'une des mémoires SRAM ou VRAM . Il possède deux canaux :
- un canal dit "canal in" ou canal d'entrée qui assure le transfert des données utiles depuis le coprocesseur MPC vers la mémoire VRAM ou vers SRAM,
- un canal dit "canal out" ou canal de sortie assurant le transfert des données depuis VRAM (ou SRAM) vers le coprocesseur MPC.

Pour effectuer un transfert de données, le contrôleur DMAC reçoit de la part du microprocesseur MPU une adresse de départ (soit dans la mémoire VRAM soit dans le coprocesseur MPC), un compte, c'est à dire le nombre d'octets à transfèrer, et un ordre de départ pour le transfert des données. Dès qu'il a reçu ces informations de la part de MPU, DMAC organise ce transfert des données utiles. Il est donc esclave de MPU, pour les informations donnant l'adresse et le compte. Le contrôleur DMAC ne voit pas les données qui transitent depuis la mémoire vers le coprocesseur et réciproquement (il en est de même évidemment pour le transit des données de MPC vers SRAM et réciproquement). Il ne fait que contrôler le cheminement de celle-ci à la demande de MPU.

Le but de la présente invention est d'intégrer dans une même puce, non seulement tous les éléments assurant les fonctions de DMAC, mais aussi, l'élément FLI1 et une partie des éléments de servitude du coprocesseur MPC, en ajoutant de nouvelles fonctions que ne possède pas GPUI, par exemple, le mode "Array Chaining" (Chainage de descripteurs) décrit en détail plus loin, et l'utilisation de l'un ou l'autre des modes de transmission "little endian" ou "big endian" (voir plus loin).

Dans la présente invention on dispose le contrôleur accès direct mémoire en série entre l'une ou l'autre des deux mémoires SRAM, VRAM et le coprocesseur de telle façon que le contrôleur accès direct mémoire, désormais appelé contrôleur de transfert multiple soit traversé directement par les chemins de données.

L'invention propose un dispositif universel de couplage tel que défini dans la revendication 1.

D'autres caractéristiques et avantages de la présente invention apparaîtront dans la description suivante donnée à titre d'exemple non-limitatif et en se référant aux dessins annexés.

Sur ces dessins :
- La figure 1 rappelle comment est constitué un dispositif universel de couplage incluant un contrôleur de transfert multiple selon l'art antérieur,
- la Figure 2 montre les différents éléments constitutifs essentiels d'un dispositif universel de couplage intégrant un contrôleur de transfert multiple selon l'invention,
- la Figure 3 montre les différents éléments constitutifs essentiels du contrôleur de transfert multiple,
- la Figure 4 détaille la structure du bus interne du contrôleur de transfert multiple,
- la Figure 5 montre quels sont les différents chemins de données qui passent à travers le contrôleur de transfert multiple,
- les Figures 6 à 11 détaillent la structure interne de chacun des registres associés à chaque canal, appartenant au contrôleur de transfert multiple,
- La figure 12 montre la table des descripteurs de paquets de données qui se trouve dans la mémoire SRAM, dans le cas où le transfert des données utiles s'effectue suivant le mode dit "ARRAY CHAINING".

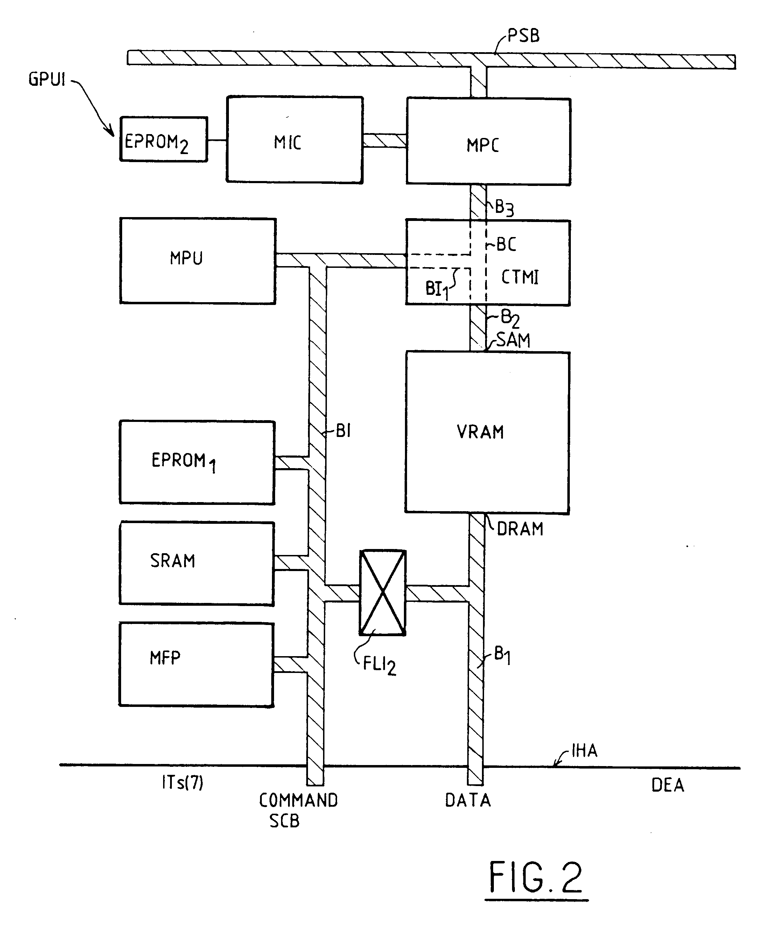

On se reporte à la figure 2 qui montre un perfectionnement du dispositif universel de couplage GPUI de la figure 1, utilisant un contrôleur de transfert multiple.

Ainsi qu'on peut le voir sur cette même figure, le contrôleur de transfert multiple, à savoir CTMI est disposé en série entre la mémoire double port VRAM et le coprocesseur MPC d'une part, et entre le bus interne BI du microprocesseur MPU et ce même coprocesseur MPC d'autre part. Pour ce faire, le contrôleur de transfert multiple CTMI comprend un bus interne à deux branches, une branche BC permettant de connecter la mémoire VRAM au coprocesseur MPC, l'autre branche, BI₁ permettant de connecter le bus interne BI du microprocesseur au coprocesseur MPC. Le bus interne BC de CTMI est relié à un bus B₂ lui-même connecté au second port SAM de la mémoire VRAM . Par ailleurs, BC est connecté à un bus B₃ lui-même relié au coprocesseur MPC.

Du fait de la disposition du contrôleur CTMI en série entre MPC et VRAM , et entre MPC et SRAM, ce contrôleur fonctionne d'une manière dite "Fly-by Mode", appelée encore simple cycle (single cycle en anglais) ce qui signifie que les données utiles sont transférées directement entre l'une ou l'autre des mémoires VRAM ou SRAM et le coprocesseur MPC, sans être jamais stockées à l'intérieur du contrôleur, le flux des données utiles passant directement à travers ce contrôleur par l'intermédiaire de l'une ou l'autre des deux branches du bus interne, c'est à dire soit BC soit BC₁.

Ce contrôleur, tout comme le contrôleur DMAC de la figure 1 comporte deux canaux de type DMA (Direct memory access en anglais) à savoir un canal d'entrée "in" et un canal de sortie "out". Les débits de données à l'intérieur du contrôleur CTMI peuvent atteindre jusqu'à 32 méga-bytes par seconde et ce contrôleur peut fonctionner suivant deux modes différents, à savoir le mode normal et le mode dit "ARRAY CHAINING". Dans le mode normal, les données sont transmises par paquets successifs de données (paquet de données se traduit par buffer, en anglais, et ce terme est le plus fréquemment utilisé par l'homme du métier) sous forme de mots de 32 bits. MPU inscrit alors dans l'un des registres de CTMI, l'adresse en mémoire VRAM (ou SRAM) de chaque paquet de données que l'on doit aller écrire ou lire dans celle-ci, ainsi que sa longueur (on dit encore son compte), c'est à dire le nombre d'octets que comprend le paquet de données à transmettre. Ayant reçu ces indications dans le registre en question, le contrôleur CTMI va alors écrire ou lire les informations dans l'une ou l'autre des deux mémoires considérées. On voit que dans ce mode, CTMI est esclave du microprocesseur MPU. Au contraire, dans le mode dit "ARRAY CHAINING", le microprocesseur indique seulement au contrôleur CTMI, l'adresse et le compte du premier paquet de données à transmettre, ces indications étant également inscrites dans l'un des registres du contrôleur. En ce qui concerne les paquets de données qui suivent le premier, le contrôleur CTMI lui-même va chercher l'adresse et le compte relatif à ceux-ci dans une table de descripteurs contenant ces informations, laquelle est contenue dans la mémoire SRAM, un descripteur donné étant associé à un paquet de données déterminé. On peut transmettre dans ce mode, jusqu'à 15 paquets de données successifs. Juste avant le transfert de ces paquets, le microprocesseur MPU indique à CTMI quel est le premier des descripteurs et le nombre de ceux-ci qui sont concernés par le transfert.

Tout comme le contrôleur DMAC de la figure 1, le contrôleur selon l'invention donne la priorité la plus haute au canal d'entrée (transfert des données depuis le coprocesseur jusqu'à l'une ou l'autre des deux mémoires). Il peut interrompre le canal de sortie, lorsque celui-ci est en train de travailler (transfert des données de l'une ou l'autre des deux mémoires vers le coprocesseur), à la fin d'un transfert d'un paquet de données ou le suspendre pour la totalité du transfert de données, c'est à dire pour le transfert de la totalité des paquets de données considérés.

On dit qu'un canal est actif, lorsqu'il est prêt à effectuer un transfert de données depuis ou vers le coprocesseur : cela signifie que, dès que ce dernier fait une requête de transfert DMA, le canal correspondant (d'entrée ou de sortie) peut effectuer le transfert.

Dans le langage de l'homme du métier, lorsque les deux canaux d'entrée et de sortie sont actifs simultanément, on dit par abus de langage qu'il y a transfert simultané, sans que cela signifie pour autant que les données sur chacun de ceux-ci soient transférées physiquement en même temps sur les bus de données B₂, BC, B₃ (le transfert physique des données est multipléxé temporellement par le multiplexeur MULT, voir plus loin).

Lorsque la mémoire VRAM se compose d'un seul banc mémoire, il peut y avoir transfert simultané sur chacun des deux canaux mais il s'accompagne de perte de performances : en effet, toute interruption d'un canal par un autre entraîne la nécessité de sauver le contexte du transfert qui était en cours sur le canal interrompu.

Cela n'est pas le cas, lorsque la mémoire VRAM se compose de deux bancs séparés de mémoire, (par exemple deux bancs séparés ayant chacun une capacité de 1 Méga-byte). Alors tout transfert simultané n'entraîne aucune perte de performance (il n'y a pas à effectuer de sauvetage de contexte).

Selon un mode préféré de réalisation de l'invention, le contrôleur CTMI inclut une génération de bit de parité pour chaque transfert de paquets de données et de contrôle de parité.

Par ailleurs, le contrôleur CTMI supporte l'un ou l'autre des modes de transmission d'informations appelés "little endian" ou "big endian" définis respectivement par les constructeurs INTEL et MOTOROLA. Chacun de ces modes consiste à définir l'ordre dans lequel sont transmis dans le temps les bits des octets, c'est à dire si on les transmet des poids forts au plus faibles ou réciproquement. L'adaptation du contrôleur selon l'invention à l'un ou l'autre des deux modes de transfert "little" ou "big endian" signifie que si ce contrôleur reçoit par PSB, des informations dans l'un des modes, par exemple provenant d'un microprocesseur de type 80386 d'INTEL, il est capable d'effectuer la conversion entre le mode "little endian" de ce dernier et le mode "big endian" compris par le microprocesseur MPU, si celui-ci est de type MOTOROLA, par exemple de type 68030 (ce qui est le cas dans l'exemple de réalisé préféré du dispositif de couplage GPUI de la Figure 2).

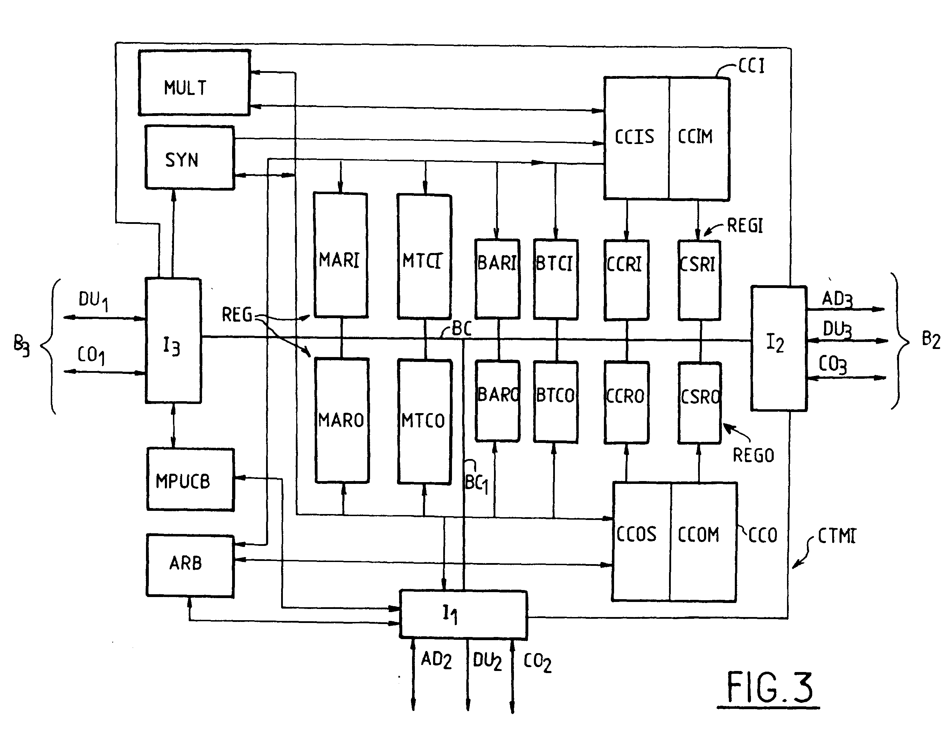

L'ensemble des éléments constitutifs du contrôleur CTMI selon l'invention qui sont montrés à la figure 3, est disposé sur un même composant semi-conducteur, ou encore puce (CHIP en anglais).

Ces principaux éléments sont les suivants :
- L'ensemble des six registres associés au canal d'entrée, à savoir les registres MARI, MTCI, BARI, BTCI, CCRI, CSRI,
- L'ensemble des six registres associés au canal de sortie, à savoir MARO, MTCO, BARO, BTCO, CCRO, CSR0,
- le contrôleur de canal d'entrée CCI,
- le contrôleur de canal sortie CCO,
- le dispositif d'arbitrage ARB des conflits d'accès des différents chemins de données, allant vers ou venant des deux mémoires VRAM, SRAM, suivant les priorités prédéfinies,
- le dispositif de synchronisation des différents signaux entrant ou sortant du contrôleur de transfert multiple CTMI, à savoir SYN,
- le multiplexeur MULT, pour multiplexer temporellement les paquets de données destinées à l'un ou l'autre des deux canaux d'entrée et de sortie vers l'une ou l'autre des deux mémoires VRAM , SRAM,
- le dispositif de gestion de l'accès du microprocesseur au coprocesseur MPC, à savoir MPUCB,
- les bus internes BC et BC₁,
- les interfaces respectives du contrôleur CTMI avec le coprocesseur, la mémoire VRAM et le microprocesseur par l'intermédiaire des bus B₃, B₂, BI, ces interfaces étant dénommées respectivement I₃,I₂ et I₁.

L'interface I₃ (voir Figure 3) reçoit des données utiles DU₁ et des informations de commande (écriture-lecture) CO₁, allant du coprocesseur MPC au contrôleur de transfert multiple CTMI et réciproquemment.

L'interface I₂ reçoit des données utiles DU₂, des informations d'adressage AD₂, et des informations de commande CO₂, allant vers ou provenant du microprocesseur MPU.

L'interface I₃ reçoit des données utiles DU₃, des informations d'adressge AD₃, et des informations de commande C0₃, allant vers ou provenant de la mémoire VRAM .

L'ensemble des registres associé au canal d'entrée est dénommé REGI alors que l'ensemble des registres associés au canal de sortie est dénommé REGO.

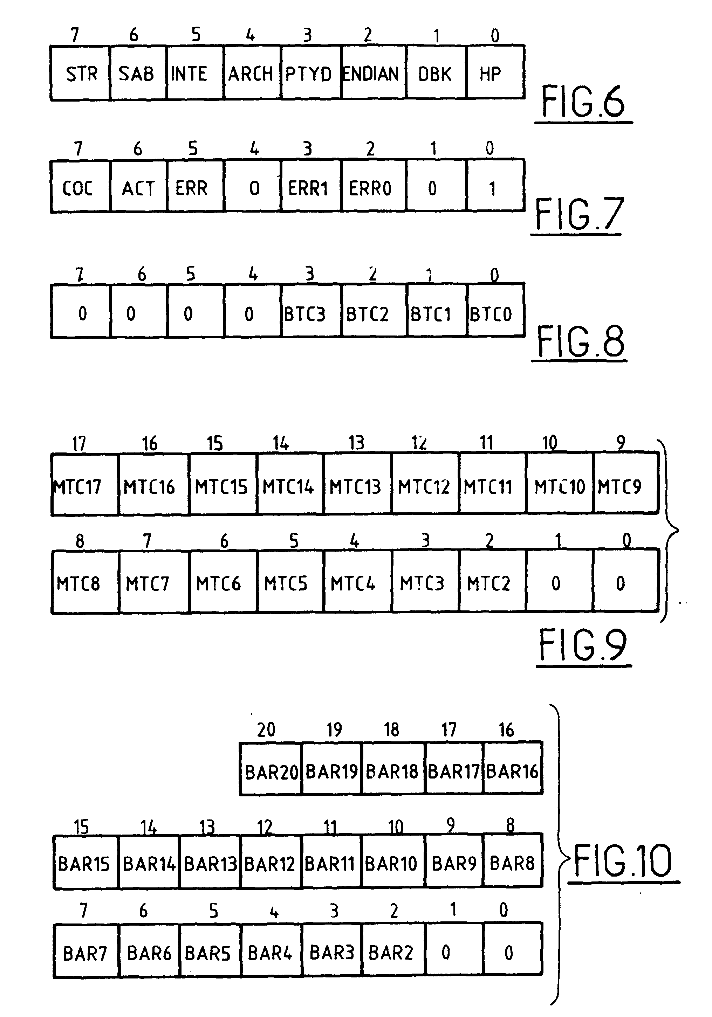

Aussi bien, l'ensemble REGI que l'ensemble REGO contiennent des informations permettant au contrôleur selon l'invention de transférer des paquets de données utiles sur l'un ou l'autre des canaux d'entrée ou de sortie vers l'une ou l'autre des deux mémoires VRAM ou SRAM ou encore vers le coprocesseur MPC. La description plus détaillée de chacun des registres constituant l'un ou l'autre des deux ensembles REGI, REGO sera exposée plus loin en relation avec des figures 6 à 11.

Le contrôleur du canal d'entrée CCI se compose en fait de deux parties, l'une appelée machine d'état esclave, désignée ici par CCIS et l'autre machine d'état maître, désignée ici par CCIM.

La machine d'état esclave CCIS gère les accès d'écriture du microprocesseur MPU a tous les registres du canal correspondant, c'est à dire aux registres appartenant à REGI. Elle effectue de plus la gestion d'indication d'erreur dans le registre CSRI (voir détails plus loin).

La machine d'état maître CCIM gère toute les opérations consistant à aller chercher les informations dans les descripteurs contenus dans la mémoire SRAM lorsque l'on utilise le mode "ARRAY CHAINING". Par ailleurs, qu'il s'agisse du mode normal ou du mode "ARRAY CHAINING", elle émet les signaux de commande (écriture/lecture) aussi bien pour le coprocesseur MPC que pour l'une ou l'autre des deux mémoires SRAM ou VRAM . Cette même machine CCIM gère également la mise à jour des registres d'adresse et de comptage de REGI.

Cette même machine CCIM effectue également le transfert des pages de données utiles dans la mémoire VRAM . On sait en effet que l'écriture (également la lecture) de la mémoire VRAM (se reporter à la demande de brevet français 91.08908 précitée) s'effectue page par page et ligne par ligne pour chaque page. Le transfert de pages de données utiles dans la mémoire VRAM organisé par la machine d'état maître CCIM respecte les conditions formulées dans la notice technique relative à la vidéo-RAM correspondante, par exemple, la notice relative à la vidéo-RAM TOSHIBA référence TC524256, de type Z-10.

Le contrôleur de canal de sortie CCO se divise en fait en deux parties, à savoir une machine d'état esclave CCOS et une machine d'état maître CCOM.

La machine d'état CCOS gère tous les accès du microprocesseur MPU a tous les registres du canal correspondant, c'est à dire ceux de l'ensemble REGO. De plus, elle effectue la gestion d'indication d'erreur dans le registre CSRO (voir plus loin).

La machine d'état maître CCOM gère l'opération consistant à aller chercher les informations dans les descripteurs contenus en mémoire SRAM dans le cas où l'on fonctionne en mode "ARRAY CHAINING" et elle gère également les opérations de transferts de type DMA (aussi bien en mode normal qu'en mode "Array Chaining"), c'est à dire la génération de signaux de commande pour le coprocesseur MPC et l'une ou l'autre des deux mémoires SRAM ou VRAM ainsi que la mise à jour des registres d'adresse et de comptage de l'ensemble REGO.

Le transfert de page depuis la mémoire VRAM est également effectué par l'intermédiaire de cette machine d'état maître CCOM dans les conditions définies par le manuel technique relatif à la mémoire VRAM , par exemple TOSHIBA, référence 524256.

On considère l'élément MPUCB.

Cet élément gère l'accès du microprocesseur au coprocesseur MPC. En fait dans ce cas, le microprocesseur délégue son pouvoir au contrôleur CTMI à travers MPUCB. Ce dernier effectue pour MPU la génération des signaux d'acquittement de transfert de données, plus connu sous leur sigle anglo-saxon DSACK (pour Data Transfert acknowledge, signaux propres au microprocesseur, MOTOROLA 68030). Il convient de préciser que les fonctions accomplies par l'élément MPUCB, étaient réalisées par le microprocesseur MPU lui-même au sein du dispositif universel de couplage de la figure 1.

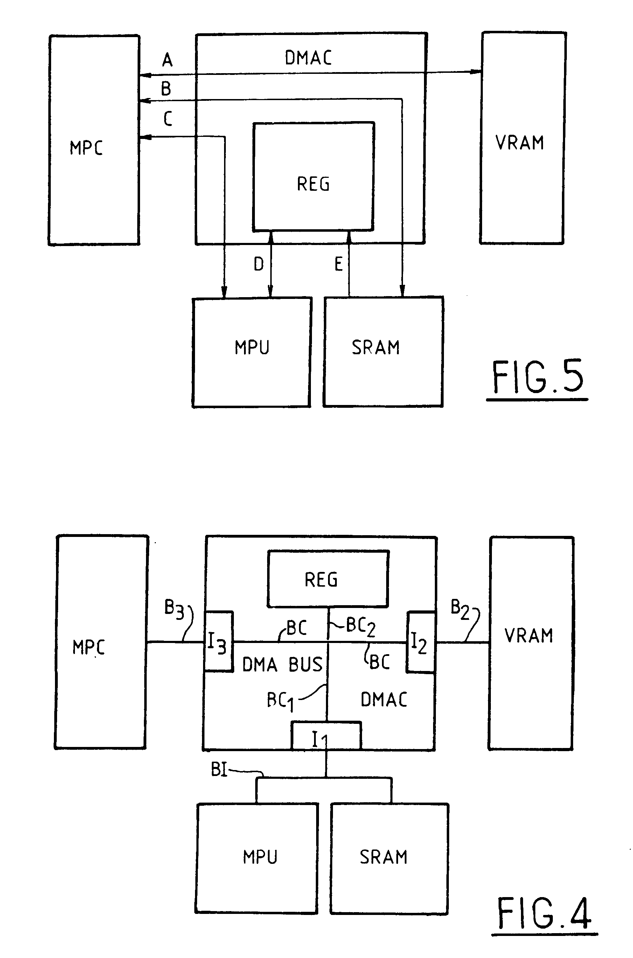

On considère désormais les figures 4 et 5 permettant de mieux comprendre le fonctionnement du dispositif d'arbitrage ARB.

Le dispositif ARB est d'une part responsable de l'allocation d'un chemin de données déterminé à celui qui le demande, ce dernier étant l'un ou l'autre des deux canaux d'entrée ou de sortie ou le microprocesseur, et d'autre part chargé de résoudre les conflits pouvant survenir lorsque des demandes simultanées sont effectuées par des éléments différents (par exemple par le microprocesseur et le coprocesseur sur l'un ou l'autre des deux canaux). Les différents chemins de données utilisés sont montrés à la figure 5. Physiquement, ils sont supportés par la structure physique montrée à la figure 4, et empruntent l'un ou l'autre des deux branches BC ou BC1, BC étant connecté aux interfaces I₃ et I₂ et BC1 étant la branche dérivée connectée à BC d'une part et I₁ d'autre part. On voit sur cette même figure 4 que physiquement, l'ensemble du registre REG est connecté à la branche principale BC par une branche secondaire de bus BC₂. La structure physique interne des bus BC, BC₁, BC₂ est identique.

Si l'on se réfère à la figure 4, on peut voir les différentes possibilités que le dispositif d'arbitrage doit prendre en compte avant de prendre sa décision. Les différents chemins de données sont en effet les suivants :

Le chemin de données A conduit les données depuis le coprocesseur MPC jusqu'à la mémoire VRAM à travers le bus BC. Pour ce chemin de données, CTMI conduit les opérations. On dit encore qu'il est maître du transfert.

Le chemin de données B conduit les données de coprocesseur vers la mémoire SRAM et réciproquement à travers BC puis BC₁ et le bus interne BI. Pour ce chemin de données le contrôleur CTMI est maître.

Le chemin de données C consiste à écrire ou lire les registres du coprocesseur MPC. Pour ce chemin, le microprocesseur MPU est maître.

Le chemin de données D est celui qui consiste à lire ou écrire les registres de l'ensemble REG (REGI + REGO). Pour ce chemin, le microprocesseur MPU est maître.

Le chemin de données E consiste à aller chercher les données dans la table de descripteurs de la mémoire SRAM. Pour ce chemin de données, le contrôleur CTMI est maître.

En ce qui concerne les chemins de données D et E, il est clair que le chemin physique emprunté est BI + BC₁ + BC₂.

Les accès à certains chemins de données sont conflictuels. Il en est ainsi pour les chemins de données A et B ou A et C. Les accès aux chemins de données A et D ou A et E sont également conflictuels. D'autres accès sont exclusifs les uns des autres. Il en est ainsi de C et D ou B et E. En fonction de ce qui vient d'être décrit ci-dessus, les caractéristiques essentielles du schéma d'arbitrage effectué par le dispositif ARB sont les suivantes :
- Le canal d'entrée a une priorité plus élevée que le canal de sortie,
- une requête de type DMA en cours sur un canal d'entrée alors que le canal de sortie est actif, a priorité sur ce dernier et le canal de sortie est obligé de relâcher le bus (BC,BC1) le plus tôt possible,
- au cours des transferts de page vers ou depuis la mémoire double port VRAM et bien qu'il n'y ait pas d'activité de transfert de données sur le bus BC de CTMI, ce dernier reste cependant actif parce que le port série de la mémoire VRAM reste impliqué dans le transfert,
- les accès du microprocesseur MPU aux bus internes (BC,BC₁) du contrôleur CTMI doivent attendre jusqu'à ce que le bus soit libre.

On considère désormais les figures 6 à 11.

La figure 6 montre le contenu de l'un ou l'autre des deux registres CCRI ou CCRO (les différents bits qu'ils contiennent ont une signification identique quel que soit le canal).

On voit que le registre de contrôle de canal CCRI (ou CCRO) contient 8 bits, à savoir STR, SAB, INTE, ARCH, PTYD, ENDIAN, DBK, HP. La signification de chacun de ces bits est la suivante, sachant que le but général de ce registre de commande de canal CCRI (ou CCRO) est de donner les paramètres nécessaires au dispositif de commande de canal CCI (ou CCO) lui indiquant la manière dont il doit travailler ( mode normal, ARRAY CHAINING, big endian ou little endian mode, etc...).

Le bit STR (qui signifie Start Channel) est mis à 1 par le microprocesseur dans le but d'activer le canal correspondant (canal entrée pour CCRI, canal sortie pour CCRO). Pour pouvoir mettre ce bit à 1, il est nécessaire que les 4 registres BARI, BTCI, MARI, MTCI registres d'adresse et de comptage, soient d'ores et déjà programmés. On peut alors acquitter la demande d'utilisation de canal DMA par le coprocesseur MPC. Cela signifie que ce dernier envoie un signal d'acquittement au dispositif de commande de canal correspondant CCI (ou CCO). Une erreur peut survenir lorsque plusieurs conditions sont remplies alors que ce même bit STR est égal à 1. Cela peut survenir par exemple lorsque le contenu du compteur MTC (voir plus loin) est nul alors qu'en même temps le contenu du bit ARCH est nul (cela signifiant dans ce cas que le mode ARRAY CHAINING n'est pas utilisé). Cela peut survenir encore lorsque le bit SAB est égal à 1 (voir signification de SAB plus loin) ou encore que le canal en question est d'ores et déjà actif ou encore que le transfert sur le canal vient d'être terminé. Cela peut survenir encore si le contenu du registre BTCI est nul alors que le mode ARRAY CHAINING est utilisé (voir description plus loin du registre BTCI).

Lorsqu'il y a une erreur, un bit d'erreur est mis à 1 dans le registre CSRI (voir plus loin, en même temps que la signification de l'erreur est indiquée dans ce même registre). Dans ce cas, on envoie une interruption au microprocesseur si le bit INTE contenu dans CCRI (ou CCRO) est égal à 1. S'il y a erreur, les autres bits de ce même registre ne sont alors pas écrits et restent inchangés.

Le bit SAB signifie, lorsqu'il est mis à 1 par le microprocesseur MPU, que ce dernier donne l'ordre de rendre le canal correspondant inactif bloquant alors tout transfert immédiatement après que le dernier mot du dernier paquet ait été transféré à l'emplacement voulu (dans VRAM, SRAM, ou MPC). Dans ce cas le bit ERR contenu dans le registre CSRI ou CSRO est mis à 1 en même temps qu'il est indiqué dans celui-ci qu'il s'agit d'un ordre du microprocesseur de rendre inactif le canal correspondant.

Le bit INTE signifie, lorsqu'il est mis égal à 1 par le microprocesseur MPU, que toute interruption en cours ou non est validée sur le canal correspondant. La valeur de ce bit ne peut être changée que si le canal correspondant est inactif (bit ACT = 0 dans le registre CSRI ou CSRO).

Le bit ARCH, mis égal à 1 par le microprocesseur MPU valide l'utilisation du mode "ARRAY CHAINING" pour un transfert de type DMA sur le canal correspondant. Quand ce bit est égal à 0, le mode normal est utilisé. La valeur de ce bit ne peut être changée que si le canal correspondant est inactif (ACT = 0, voir plus loin).

Le bit PTYD, utilisé seulement sur le canal de sortie, mis égal à 1 par le microprocesseur, invalide le contrôle de parité pour les transferts de données entre la mémoire VRAM et le coprocesseur. Quand ce bit est égal à 0, le contrôle de parité est validé. Ce bit ne peut être changé que si le canal correspondant est inactif (ACT = 0).

Le bit ENDIAN mis à 1 par le microprocesseur MPU signifie que l'on sélectionne le mode "big endian", pour les transferts de données entre l'une ou l'autre des deux mémoires SRAM ou VRAM et le coprocesseur. Quand ce bit est égal à O, le mode "little endian" est sélectionné. On peut noter que l'un des deux canaux peut travailler en mode big endian alors que l'autre travaille en mode opposé. La valeur de ce bit ENDIAN ne peut être changée que si le canal est inactif.

Le bit DBK ( qui est le sigle de Dual Bank Mode) n'est utilisé que pour le transfert vers la mémoire double port VRAM . Il est mis égal à 1 par le microprocesseur en vue d'allouer pour chaque canal un banc de mémoire séparé. Si ce bit DBK est égal à 0, cela signifie que l'on est en mode single bank, c'est à dire que l'on ne peut transférer des données que sur un seul canal à la fois.

Le bit HP définit un mode de fonctionnement appelé mode haute priorité (High Priority Mode) qui n'est utilisable que sur le canal d'entrée, le canal de sortie étant alors bloqué (un canal bloqué est un canal actif dont les requêtes DMA provenant du coprocesseur MPC sont masquées ou bloquées, il ne voit donc pas les requêtes et ne peut donc y répondre). Dans ce mode haute priorité, le bit HP est mis égal à I par MPU.

Si HP est égal à 0 on est en mode normal.

On considère la figure 7.

Le registre CSRI d'état du canal d'entrée, (CSRO pour le canal de sortie), indique l'état de fonctionnement du canal correspondant et comprend 8 bits qui sont les suivants :

Le bit COC (sigle anglais de Channel Operation Completed) est mis égal à 1 par le dispositif de contrôle de canal CCI (ou CC0) correspondant dès qu'un transfert est terminé sur ce dernier. Il est donc mis égal à 1 lorsqu'un transfert d'un paquet de données est terminé en mode normal, ou lorsqu'un transfert est terminé en mode ARRAY CHAINING, ou lorsque le bit SAB est égal à 1 dans CCRI (ou CCRO), lorsqu'il y a une erreur de parité durant un transfert (sur le canal de sortie seulement), lorsqu'il y a une quelconque erreur (par exemple lorsque le canal correspondant est actif et que l'on veut réécrire soit CCRI soit CSRI) soit encore lorsqu'il y a une erreur de comptage. Si COC égale 1, Une interruption est envoyée au microprocesseur si le bit INTE est égal à 1.

Le bit ACT mis égal à 1 par le dispositif de contrôle CCI (ou CCO) signifie que le canal en question est actif. Dès qu'un transfert est terminé sur ce canal, ce bit est mis à égal à 0. Les conditions dans lesquelles se termine un transfert sont celles décrites ci-dessus, dans le paragraphe concernant le bit COC.

Le bit ERR signifie qu'il y a une erreur : il est mis égal à 1 par le dispositif CCI (CCO) dès qu'une erreur survient, c'est à dire soit lorsque SAB est égal à 1, soit lorsqu'il y a une erreur de parité, soit lorsqu'il y a erreur durant l'opération en cours, soit lorsqu'il y a erreur de comptage dans l'un des registres de comptage BTCI ou MTCI

Les deux bits ERR0, ERR1 indiquent, à eux deux, quel est le type d'erreur commise. Lorsqu'ils sont simultanément égaux à 0, il s'agit d'une erreur commise lors du transfert. Lorsque ERR1 est égal à O alors que ERR0 est égal 1, il s'agit d'une erreur de comptage, soit dans le registre MTCI (ou MTCO) ou encore BTCI (ou BTCO).

Lorsque ERR1 est égal à I alors que ERR0 est égal à 0, il s'agit d'une erreur de parité, et lorsque les deux bits d'erreur sont simultanément égaux à 1, il s'agit d'une invalidation du canal correspondant par le microprocesseur (SAB = 1).

On considère la figure 8.

Le registre de comptage de transfert de base BTCI (ou BTC0), est un registre de comptage sur 8 bits qui indique le nombre de descripteurs sur le canal correspondant dans le mode ARRAY CHAINING. Dans l'exemple de réalisation décrit ici, on peut allouer jusqu'à 15 descripteurs pour un transfert selon ce mode.

Ce registre doit être chargé avec une valeur non nulle sur les bits de rang 0 à 3, à savoir les bits BTC0 à BTC3, avant que le bit STR ne soit égal à 1 dans le registre CCRI (ou CCRO) correspondant. si ce n'est pas le cas, alors le bit d'erreur est mis égal à 1 dans CSRI et une erreur de comptage est indiquée par les deux bits ERR0 et ERR1. Le compteur BTCI est décrémenté d'une unité chaque fois que le dispositif de contrôle CCI charge un descripteur dans les registres MARI et MTCI (descripteur dont le contenu a été lu dans SRAM). Lorsque BTCI est égal à 0 ainsi que MTCI (voir également la description ci-après pour ce dernier) dès qu'un cycle de transfert est terminé, le bit C0C est mis égal à 1 dans le registre correspond CSRI (ou CSRO). Le bit ACT est alors mis égal à 0 et une interruption est envoyée au microprocesseur si elle est validée.

On considère la figure 9.

Le registre de comptage de transfert mémoire, à savoir MTCI (ou MTCO), est un registre sur 18 bits qui indique la longueur du transfert en bytes lorsque le mode normal est sélectionné. Dans le mode ARRAY CHAINING, il est chargé par le contrôleur de canal correspondant CCI à partir d'un descripteur dans la mémoire SRAM. Les deux bits de rang le plus bas, à savoir de rang 0 et 1, sont toujours égaux à 0. Dans ce dernier cas, le compteur MTCI (MTCO) ne compte que des mots de 32 bits. En effet, MTCI qui compte sur 16 bits, ne compte que tous les quatre octets, puisque les bits de rang 0 et 1 sont égaux à 0. On compte donc bien en fait des mots de 32 bits. Les valeurs non nulles pour les bits de rang 0 et 1 sont ignorées.

La longueur maximum d'un transfert en mode normal est de 256 Kilo-bytes - 4, alors qu'elle est de 2 méga-bytes (taille maximum de VRAM, dans l'exemple de réalisation décrit ici) en mode ARRAY CHAINING. Si le contenu de MTCI (ou MTCO) est égal à 0 quand le canal correspondant est activé en mode normal, une erreur de comptage est alors indiquée dans CSRI (ou CSRO) et une interruption est engendrée. Si pour un descripteur donné, le contenu de MTCI est égal à 0, une erreur de comptage est également indiquée dans le registre CSRI ou CSRO correspondant, et ce au moment où l'on charge dans MTCI le descripteur correspondant (on ne peut charger un descripteur que si MTCI a un contenu au préalable égal à 0). Pendant une opération de transfert, le contenu de MTC est décrémenté de 4 chaque fois qu'un mot est transféré (chaque mot de 32 bits contenant 4 octets).

On considère la figure 10.

Le registre d'adresse de base BARI (ou BARO) est un registre de 21 bits programmé avec l'adresse de départ de la table de descripteurs du canal correspondant. Ce registre est bien entendu utilisé en mode ARRAY CHAINING. Ces bits sont dénommés BAR2 à BAR20, les deux premiers bits de rang 0 et 1 restant en permanence égaux à 0. Les bits BAR0 à BAR6 forment un compteur d'adresse alors que les bits BAR7 à BAR20 servent à adresser toute la mémoire SRAM.

Chaque descripteur comprend deux parties, chacune formée d'un mot de 32 bits (4 octets). la première contient le compte de buffer, c'est à dire, la longueur en mots de 32 bits du buffer destiné à être transféré vers ou depuis la mémoire VRAM ou SRAM. La seconde contient l'adresse où aller écrire ou lire ce buffer dans cette même mémoire. Dans une même table, on peut adresser jusqu'à 16 descripteurs dont seulement 15 sont réellement utilisés par canal (par exemple, le descripteur 0 n'est pas utilisé). Dès qu'un mot d'un descripteur a été lu dans la table par le contrôleur de canal CCI, les bits BAR₀ et BAR₆ sont incrémentés de 4 pour pointer le mot suivant. Ce mot peut être soit le second mot (adresse buffer) du même descripteur ou le premier mot du descripteur suivant.

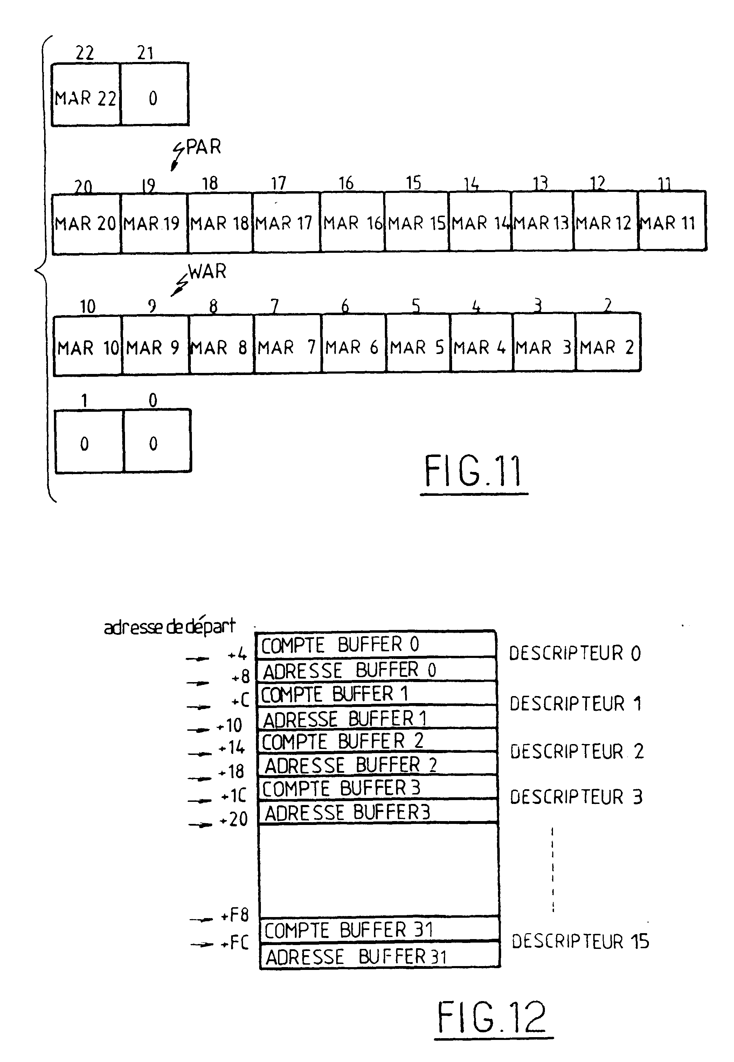

On considère la figure 11.

Le registre d'adresse mémoire MARI (ou MARO) est un registre compteur de 23 bits programmé avec l'adresse de départ en mémoire VRAM du paquet de donnée destiné à être transmis dans celle-ci ou reçu de celle-ci, dans le mode normal. En mode ARRAY CHAINING ce registre MARI (ou MARO) est chargé par le contrôleur de canal CCI (ou CCO) à partir d'un descripteur dans la mémoire SRAM. Ainsi qu'il a été dit plus haut, après chaque transfert d'un mot, son contenu est incrémenté de 4. Le bit MAR22 permet au contrôleur de canal CCI de distinguer entre la mémoire VRAM ou SRAM. Si ce dernier bit est égal à 0, il s'agit de la mémoire VRAM . S'il est égal à 1, il s'agit de la mémoire SRAM.

La mémoire VRAM étant organisée en page de 2 kilo-bytes (voir la demande te brevet français précitée), le registre d'adresse mémoire (MARI, MARO) se divise en deux compteurs séparés, à savoir d'une part, un compteur d'adresse mot PAR qui est incrémenté à chaque transfert d'un mot entre le coprocesseur MPC et le port série de la mémoire VRAM, et d'autre part un compteur WAR d'adresse de page qui est incrémenté après chaque transfert de page si le précédent compteur d'adresse de mot est de contenu nul. Pour des transferts vers la mémoire SRAM, les deux compteurs précédents sont connectés ensemble pour former un compteur sur 19 bits. Par ailleurs, en ce qui concerne le canal de sortie, il n'y a qu'un seul compteur de 19 bits.

On considère désormais la figure 12 qui montre comment est constitué une table de descripteurs pour un transfert en mode "ARRAY CHAINING". Cette table contenue en mémoire SRAM comprend par exemple 16 descripteurs numérotés de 0 à 15.

Celle-ci comprend une adresse de départ qui est l'adresse où l'on trouve le premier descripteur 0. Par convention, ce premier descripteur est vide.Le descripteur 1 comprend le compte et l'adresse relatifs au premier paquet de données à transférer, et ainsi de suite jusqu'au descripteur 15 qui comprend le compte et l'adresse relatifs au 15ème paquet de données à transférer.

On rappelle que chaque descripteur comprend le compte et l'adresse relatifs au paquet de données à transférer qui lui correspond, dans (ou depuis) VRAM ou SRAM, le compte étant destiné à être envoyé dans MTCI (ou MTCO) et l'adresse dans MARI (ou MARO).

Dans le mode "ARRAY CHAINING", dès qu'un paquet de buffer est transféré, le contrôleur CTMI, par l'intermédiaire de son contrôleur de canal CCI (ou CCO) va chercher l'adresse du descripteur suivant dans la table de descripteurs en mémoire SRAM.

Il n'y a pas de contrainte particulière pour placer la table de descripteurs correspondant à un canal déterminé à l'intérieur de !a mémoire SRAM, à l'exception prés que les descripteurs d'une même table doivent être situés à la suite les uns des autres.

Si l'on veut effectuer un transfert, le registre BARI (ou BARO) est programmé avec l'adresse du premier descripteur dans la table de descripteur de SRAM. Ce registre est augmenté de 8 pour obtenir l'adresse du descripteur suivant. Lorsqu'une requête DMA est envoyée au contrôleur de transfert multiple, son contrôleur de canal CCI charge dans MTCI le premier mot du premier descripteur pointé par le registre BARI (ou BARO) qui donne le compte de buffer. Alors le contenu de BARI (ou BARO) est incrémenté de 4 et le second mot du descripteur est lu par CCI en mémoire SRAM et chargé dans le registre MARI (ou MARO). Il s'agit donc de l'adresse où doit être envoyé ou lu le buffer en question, en mémoire VRAM ou SRAM. Ensuite, BARI ou BARO est à nouveau incrémenté de 4 pour pointer le descripteur suivant et le registre BTCI (ou BTCO) est incrémenté de 1. Le compte de buffer est alors vérifié par CTMI et ainsi de suite si ce compte n'est pas nul. Dans le cas où il est nul, les bits d'erreur ERR sont mis à 1 dans le registre CSRI (ou CSRO). Le canal devient alors inactif, le bit COC étant mis à 1 et une interruption envoyée au microprocesseur si elle est validée.

## Revendications

1. Dispositif universel de couplage (GPUI) d'un bus d'ordinateur (PSB) à un contrôleur d'un groupe de périphériques (DEA) reliés entre eux par une liaison spécifique, à laquelle le contrôleur est relié physiquement, comprenant :
- un microprocesseur (MPU) associé à au moins une mémoire (SRAM) contenant son propre système d'exploitation et possédant un bus interne (BI),
- une interface de liaison (IHA) avec le contrôleur du groupe de périphériques (DEA) assurant le transfert de trames de données soit vers la liaison, soit vers le bus,
- une mémoire vive tampon à double port (VRAM) connectée par l'intermédiaire d'un premier bus (B1) à la dite interface (IHA) et reliée au bus d'ordinateur par l'intermédiaire d'une interface spécifique (MPC) de ce bus, le transfert des données entre l'interface de liaison (IHA) et la mémoire double port d'une part , entre celle-ci (VRAM) et le bus d'ordinateur (PSB) d'autre part, étant organisé par le microprocesseur (MPU),
caractérisé en ce que le transfert des informations entre la mémoire à double port et le bus d'ordinateur d'une part, et entre le bus d'ordinateur et la mémoire associée au microprocesseur d'autre part, est effectué sous le contrôle d'un contrôleur de transfert multiple (CTMI) placé en série entre la dite interface spécifique du bus d'ordinateur et la mémoire vive à double port (VRAM), le contrôleur de transfert multiple étant connecté par l'intermédiaire d'un second bus (B2) à la mémoire double port et d'un troisième (B₃) à l'interface spécifique, le transfert s'effectuant sur un premier canal Logique de sortie de données et sur un second canal Logique d'entrée de données, ces deux canaux étant associés respectivement à un premier et un second ensemble de registres (REGI, REGO) programmés par le microprocesseur pour y inscrire des informations permettant l'organisation de chaque transfert sur chacun des premier et deuxième canal, le contrôleur de transfert comportant :
a) un bus central (BC, BC1) relié d'une part par une première interface (I₃) au troisième bus (B₃) et d'autre part au dit bus interne(BI) du microprocesseur par une seconde interface (I₁) et au second bus (B₂) par une troisième interface (I₂), les registres de chacun des deux ensembles (REGI, REGO) associés à un canal étant connectés à ce bus central,
b) un premier et un second contrôleur de canal (CCI, CCO) associés respectivement au premier et second canal et connectés à chacun des registres de l'ensemble (REGI, REGO) associés au même canal,
c) un dispositif d'arbitrage (ARB) connecté d'une part au microprocesseur (MPU) par la dite seconde interface (I₁) et d'autre part à chacun des contrôleurs de canal (CCI, CCO),
le dispositif d'arbitrage (ARB), arbitrant l'allocation de chacun des deux canaux au chemin de données allant vers les différentes mémoires ou le microprocesseur suivant des priorités prédéfinies, les contrôleurs (CCI, CCO) de canal commandant pour le canal qui leur est associé d'une part l'accès d'écriture du microprocesseur aux registres (REGI, REGO) associés à ce canal et d'autre part le transfert des données en accès direct mémoire vers chacune des dites mémoires.

2. Dispositif selon la revendication 1 caractérisé en ce que le contrôleur de transfert comprend un multiplexeur (MULT) pour multiplexer temporellement les paquets de données destinés à l'un ou l'autre des deux canaux d'entrée et de sortie vers les mémoires, ce multiplexeur étant connecté d'une part à la seconde interface (I₁) et d'autre part à chacun des deux contrôleurs de canal.

3. Dispositif selon l'une quelconque des revendications 1, 2 caractérisé en ce que le contrôleur de transfert comprend un dispositif de synchronisation des différents signaux (SYN) entrant ou sortant du contrôleur de transfert, relié d'une part à la seconde interface (I₁) et d'autre part au premier et au second contrôleur de canal.

4. Dispositif selon l'une des revendications 1, 2, 3 caractérisé en ce que le contrôleur de transfert comporte en outre un dispositif de gestion (MPUCB) de l'accès du microprocesseur à l'interface spécifique (MPC) du bus d'ordinateur , connecté d'une part à la première interface (I₃) et d'autre part relié au bus interne (BI) du microprocesseur (MPU) par l'intermédiaire de la seconde interface (I₁).

5. Dispositif selon la revendication 1 caractérisé en ce que le premier contrôleur de canal comprend une machine d'état esclave (CCIS) et une machine d'état maître (CCIM), la machine d'état esclave gérant les accès d'écriture du microprocesseur à tous les registres du premier canal et effectuant de plus la gestion d'indication d'erreur dans un registre particulier (CSRI) associé à ce canal.

6. Dispositif selon l'une des revendication 1 et 5 caractérisé en ce que le second contrôleur de canal comprend une machine d'état esclave (CCOS) et une machine d'état maître (CCOM), la machine d'état esclave gérant tous les accès du microprocesseur (MPU) à tous les registres du second canal et effectuant de plus la gestion d'indication d'erreur dans un registre particulier (CSRO) de ce même canal.

7. Dispositif selon l'une des revendications 1, 5, 6 caractérisé en ce qu'il fonctionne en mode de chaînage de descripteur, ou encore mode "Array Chaining" consistant à transférer de manière automatique une suite de n paquets de données à la suite les uns des autres depuis ou vers les mémoires, les n paquets de données étant chacun associé à un descripteur de paquet de données, l'ensemble des descripteurs relatifs à chacun de ces paquets étant inscrit dans une mémoire associée au microprocesseur et reliée à ce dernier par l'intermédiaire de son bus interne.

8. Dispositif selon la revendication 7, caractérisé en ce que chaque descripteur comprend deux parties, la première contenant le compte de paquet de données indiquant la longueur, c'est à dire le nombre d'informations binaires que comprend chaque paquet de données à transférer, la seconde partie du descripteur comprenant l'adresse où doit être envoyée le dit paquet de données dans la mémoire à laquelle il est destiné.

## Patentansprüche

1. Universelle Vorrichtung (GPUI) zur Kopplung eines Rechnerbusses (PSB) mit einem Controller (DEA) einer Gruppe von Peripheriegeräten, die miteinander über eine spezifische Verbindung verbunden sind, mit der der Controller physisch verbunden ist, mit:
- einem Mikroprozessor (MPU), dem wenigstens ein Speicher (SRAM) zugeordnet ist, der sein eigenes Betriebssystem enthält, und einen internen Bus (BI) besitzt,
- einer Schnittstelle (IHA) für die Verbindung mit dem Controller (DEA) der Peripheriegerät-Gruppe, die die Übertragung von Datenrahmen entweder zur Verbindung oder zum Bus sicherstellt,
- einem Doppelanschluß-Puffer-Arbeitsspeicher (VRAM), der über einen ersten Bus (B₁) mit der Schnittstelle (IHA) verbunden ist und mit dem Rechnerbus über eine spezifische Schnittstelle (MPC) dieses Busses verbunden ist, wobei die Datenübertragung zwischen der Verbindungsschnittstelle (IHA) und dem Doppelanschluß-Speicher einerseits und zwischen diesem (VRAM) und dem Rechnerbus (PSB) andererseits durch den Mikroprozessor (MPU) organisiert wird,
dadurch gekennzeichnet, daß die Übertragung von Informationen zwischen dem Doppelanschluß-Speicher und dem Rechnerbus einerseits und zwischen dem Rechnerbus und dem dem Mikroprozessor zugeordneten Speicher andererseits unter der Steuerung eines Mehrfachübertragungs-Controllers (CTMI) erfolgt, der zwischen der spezifischen Schnittstelle des Rechnerbusses und dem Doppelanschluß-Arbeitsspeicher (VRAM) in Serie geschaltet ist, wobei der Mehrfachübertragungs-Controller über den zweiten Bus (B₂) mit dem Doppelanschluß-Speicher und über einen dritten Bus (B₃) mit der spezifischen Schnittstelle verbunden ist, wobei die Übertragung auf einem ersten logischen Datenausgangskanal und auf einem zweiten logischen Dateneingangskanal erfolgt, wobei diese zwei Kanäle einer ersten bzw. einer zweiten Gesamtheit von Registern (REGI, REGO) zugeordnet sind, die durch den Mikroprozessor programmiert werden, um in sie Informationen einzuschreiben, die die Organisation jeder Übertragung auf dem ersten und auf dem zweiten Kanal ermöglichen,
wobei der Übertragungs-Controller enthält:
a) einen zentralen Bus (BC, BC1), der einerseits über eine erste Schnittstelle (I₃) mit dem dritten Bus (B₃) und andererseits über eine zweite Schnittstelle mit dem internen Bus (BI) des Mikroprozessors und über eine dritte Schnittstelle (I₂) mit dem zweiten Bus (B₂) verbunden ist, wobei die Register jeder der zwei Gesamtheiten (REGI, REGO), die einem Kanal zugeordnet sind, mit diesem zentralen Bus verbunden sind,
b) einen ersten und einen zweiten Kanal-Controller (CCI, CCO), die dem ersten bzw. dem zweiten Kanal zugeordnet sind und mit jedem der Register der demselben Kanal zugeordneten Gesamtheit (REGI, REGO) verbunden sind,
c) eine Arbitrierungsvorrichtung (ARB), die einerseits über die zweite Schnittstelle (I₁) mit dem Mikroprozessor (MPU) und andererseits mit jedem der Kanal-Controller (CCI, CCO) verbunden ist,
wobei die Arbitrierungsvorrichtung (ARB), die die Zuweisung jedes der zwei Kanäle an den zu den verschiedenen Speichern oder dem Mikroprozessor führenden Datenweg entsprechend im voraus definierter Prioritäten festlegt und wobei die Kanal-Controller (CCI, CCO) für den Kanal, der ihnen zugeordnet ist, einerseits den Schreibzugriff des Mikroprozessors auf die diesem Kanal zugeordneten Register (REGI, REGO) und andererseits die Datenübertragung bei einem Direktspeicherzugriff auf einen der Speicher steuern.

2. Vorrichtung nach Anspruch 1, dadurch gekennzeichnet, daß der Übertragungs-Controller einen Multiplexer (MULT) enthält zum zeitlichen Multiplexieren der für den einen oder den anderen der Eingangs- bzw. Ausgangskanäle bestimmten Datenpakete an die Speicher, wobei dieser Multiplexer einerseits mit der zweiten Schnittstelle (I₁) und andererseits mit jedem der zwei Kanal-Controller verbunden ist.

3. Vorrichtung nach irgendeinem der Ansprüche 1, 2, dadurch gekennzeichnet, daß der Übertragungs-Controller eine Vorrichtung (SYN) zur Synchronisation der verschiedenen Signale enthält, die in den Übertragungs-Controller eingegeben oder von diesem ausgegeben werden, die einerseits mit der zweiten Schnittstelle (I₁) und andererseits mit dem ersten und mit dem zweiten Kanal-Controller verbunden ist.

4. Vorrichtung nach einem der Ansprüche 1, 2, 3, dadurch gekennzeichnet, daß der Übertragungs-Controller außerdem eine Vorrichtung (MPUCB) zur Steuerung des Zugriffs des Mikroprozessors auf die spezifische Schnittstelle (MPC) des Rechnerbusses enthält, die einerseits mit der ersten Schnittstelle (I₃) und andererseits über die zweite Schnittstelle (I₁) mit dem internen Bus (BI) des Mikroprozessors (MPU) verbunden ist.

5. Vorrichtung nach Anspruch 1, dadurch gekennzeichnet, daß der erste Kanal-Controller eine Slave-Zustandsmaschine (CCIS) und eine Master-Zustandsmaschine (CCIM) enthält, wobei die Slave-Zustandsmaschine die Schreibzugriffe des Mikroprozessors auf sämtliche Register des ersten Kanals steuert und darüber hinaus die Fehleranzeigesteuerung in einem diesem Kanal zugeordneten besonderen Register (CSRI) ausführt.

6. Vorrichtung nach einem der Ansprüche 1 und 5, dadurch gekennzeichnet, daß der zweite Kanal-Controller eine Slave-Zustandsmaschine (CCOS) und eine Master-Zustandsmaschine (CCOM) enthält, wobei die Slave-Zustandsmaschine sämtliche Zugriffe des Mikroprozessors (MPU) auf sämtliche Register des zweiten Kanals steuert und darüber hinaus die Fehleranzeigesteuerung in einem besonderen Register (CSRO) desselben Kanals ausführt.

7. Vorrichtung nach einem der Ansprüche 1, 5, 6, dadurch gekennzeichnet, daß sie im Deskriptor-Verkettungsmodus oder "Array Chaining"-Modus arbeitet, der darin besteht, automatisch eine Folge aus n Datenpaketen nacheinander von den Speichern oder an die Speicher zu übertragen, wobei den n Datenpaketen jeweils ein Datenpaket-Deskriptor zugeordnet ist, wobei die Gesamtheit von Deskriptoren, die mit jedem dieser Pakete in Beziehung stehen, in einen Speicher geschrieben werden, der dem Mikroprozessor zugeordnet und mit diesem letzteren über dessen internen Bus verbunden ist.

8. Vorrichtung nach Anspruch 7, dadurch gekennzeichnet, daß jeder Deskriptor zwei Teile enthält, wovon der erste den die Länge angebenden Datenpaket-Zählwert enthält, d. h. die Anzahl von binären Informationen, die jedes zu übertragende Datenpaket aufweist, und der zweite die Adresse enthält, an die das Datenpaket in dem Speicher, für den es bestimmt ist, geschickt werden muß.

## Claims

1. Universal device (GPUI) for coupling a computer bus (PSB) to a controller of a group of peripherals (DEA) connected together by a specific link, to which the controller is physically connected, comprising:
- a microprocessor (MPU) associated with at least one memory (SRAM) containing its own operating system and having an internal bus (BI),
- a interface (IHA) linking with the controller of the group of peripherals (DEA) ensuring the transfer of data frames either to the link or to the bus,
- a double-port buffer random access memory (VRAM) connected via a first bus (B1) to said interface (IHA) and connected to the computer bus via a specific interface (MPC) of this bus, the transfer of the data between the linking interface (IHA) and the double-port memory on the one hand, and between the latter (VRAM) and the computer bus (PSB) on the other hand, being organised by the microprocessor (MPU),
characterised in that the transfer of information between the double-port memory and the computer bus on the one hand, and between the computer bus and the memory associated with the microprocessor on the other hand, is performed under the control of a multiple transfer controller (CTMI) placed in series between said specific interface of the computer bus and the double-port random access memory (VRAM), the multiple transfer controller being connected via a second bus (B2) to the double-port memory and via a third one (B₃) to the specific interface, the transfer being performed on a first data output Logic channel and on a second data input Logic channel, these two channels being associated respectively with a first and a second set of registers (REGI, REGO) programmed by the microprocessor so as to record therein information permitting the organisation of each transfer over each of the first and second channels, the transfer controller comprising:
a) a central bus (BC, BC1) connected on the one hand by a first interface (I₃) to the third bus (B₃) and on the other hand to said internal bus (BI) of the microprocessor by a second interface (I₁) and to the second bus (B₂) by a third interface (I₂), the registers of each of the two sets (REGI, REGO) associated with a channel being connected to this central bus,
b) a first and a second channel controller (CCI, CCO) associated respectively with the first and second channel and connected to each of the registers of the set (REGI, REGO) associated with the same channel,
c) an arbitration device (ARB) connected on the one hand to the microprocessor (MPU) by said second interface (I₁) and on the other hand to each of the channel controllers (CCI, CCO),
the arbitration device (ARB) arbitrating on the allocation of each of the two channels to the data path going towards the various memories or the microprocessor according to predefined priorities, the channel controllers (CCI, CCO) controlling, for the channels associated with them on the one hand, writing access by the microprocessor to the registers (REGI, REGO) associated with this channel and, on the other hand, the transfer of data in direct memory access to each of said memories.

2. Device according to Claim 1 characterised in that the transfer controller comprises a multiplexer (MULT) for temporally multiplexing the data packets addressed to one or other of the two input and output channels towards the memories, this multiplexer being connected on the one hand to the second interface (I₁) and on the other hand to each of the two channel controllers.

3. Device according to any one of Claims 1, 2 characterised in that the transfer controller comprises a device for synchronising the various signals (SYN) entering or leaving the transfer controller, connected on the one hand to the second interface (I₁) and on the other hand to the first and second channel controller.

4. Device according to one of Claims 1, 2, 3 characterised in that the transfer controller further comprises a device (MPUCB) for managing access by the microprocessor to the specific interface (MPC) of the computer bus, connected on the one hand to the first interface (I₃) and on the other hand connected to the internal bus (BI) of the microprocessor (MPU) via the second interface (I₁).

5. Device according to Claim 1 characterised in that the first channel controller comprises a slave status machine (CCIS) and a master status machine (CCIM), the slave status machine managing writing access by the microprocessor to all the registers of the first channel and also managing error indication in a particular register (CSRI) associated with this channel.

6. Device according to one of Claims 1 and 5 characterised in that the second channel controller comprises a slave status machine (CCOS) and a master status machine (CCOM), the slave status machine managing all the accesses by the microprocessor (MPU) to all the registers of the second channel and also managing error indication in a particular register (CSRO) of this same channel.

7. Device according to one of Claims 1, 5, 6 characterised in that it functions in descriptor chaining mode, or "Array Chaining" mode consisting in automatically transferring a series of n data packets one after the other from or to the memories, the n data packets each being associated with a data packet descriptor, all the descriptors relating to each of these packets being recorded in a memory associated with the microprocessor and connected thereto via its internal bus.

8. Device according to Claim 7, characterised in that each descriptor comprises two portions, the first containing the data packet count indicating the length, i.e. the number of pieces of binary information comprised by each data packet to be transferred, the second portion of the descriptor comprising the address to which said data packet has to be sent in the memory to which it is addressed.
